(19) Europäisches Patentamt
European Patent Office
Office européen des brevets

(11) **EP 4 443 702 A1**

(12) **EUROPEAN PATENT APPLICATION**

(43) Date of publication:
**09.10.2024 Bulletin 2024/41**

(21) Application number: **23166903.7**

(22) Date of filing: **06.04.2023**

(51) International Patent Classification (IPC):
**H02K 1/14** *(2006.01)*    **H02K 3/28** *(2006.01)*
**H02K 7/18** *(2006.01)*    **H02K 21/16** *(2006.01)*
**H02K 29/03** *(2006.01)*

(52) Cooperative Patent Classification (CPC):
**H02K 1/148; H02K 3/28; H02K 7/1838;**
H02K 21/16; H02K 29/03; H02K 2213/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S
7330 Brande (DK)**

(72) Inventors:
• **Azar, Ziad
Sheffield, S10 4ED (GB)**

• **Bhide, Ravindra
Cambridge, CB5 8BG (GB)**
• **Duke, Alexander
Sheffield, S10 5SN (GB)**
• **Li, Xing
7330 Brande (DK)**

(74) Representative: **SGRE-Association
Siemens Energy Global GmbH & Co. KG
SE I IM P Intellectual Property
Siemenspromenade 9
91058 Erlangen (DE)**

(54) **STATOR SEGMENT AND SEGMENTED STATOR FOR A WIND TURBINE GENERATOR**

(57) A stator segment (101a,101b,101c) for an electrical machine (100), in particular permanent magnet synchronous electrical generator of a wind turbine, comprising: a core ring portion (106a,106b,106c) extending in a circumferential direction forming less than a whole circumference; plurality first teeth (107a,107b,107c) extending radially from the ring portion (106a-c); two second teeth (108a,108b,108c) extending radially from the ring portion and being arranged at two circumferential ends of the ring portion (106a-c); wherein between each of two adjacent first teeth (107a-c) a first slot (109a,109b,109c) is formed, wherein between each of the second teeth (108a-c) and an adjacent first tooth (107a-c) a second slot (110a-c) is formed. Said stator segment (101a-c) comprises further a multiple phase winding set (105A,105B,105C) wound according to a concentrated winding topology.

FIG 1

EP 4 443 702 A1

**Description**

Field of invention

The present invention relates to a stator segment for an electrical machine, relates further to an electrical machine comprising plural stator segments and still further relates to a wind turbine comprising the electrical generator.

Art Background

Conventionally, a stator may be assembled from plural stator segments each spanning a portion of a whole circumference. Conventionally, the stator segments have exposed end coils, i.e. coils which are exposed to air at the segment circumferential ends instead of enclosed in slots.

Exposed end coils suffer from unreliable mechanical performances during transportation, assembly and operation. One of the critical consequences is that two facing end coils of two neighbouring segments may scrape each other under electromagnetic forces, thermal deformation and vibrations. Without reliable fixation this may cause insulation damage leading to the requirement of generator exchange.

One conventional straightforward solution is to increase the segment-to-segment gap to avoid contact or touch of neighbouring segments. This however may increase the 2f torque harmonic and most importantly does not eliminate the risk of damage due to scraping of two end coils from the adjacent segments. To fix the exposed end coils mechanical fixation solutions (for example using straps, clamps, bolds, etc.) may not be the optimum solution in terms of enhanced lifetime and reliability.

One other conventional method is to remove the end coils which makes the first and the last slot of each segment coil-free which however largely reduces the output power and increases unwanted harmonics. Further conventionally, single-layer concentrated-winding topology has been employed which does not have exposed end coils and can be easily modularized or segmented. The disadvantages include higher harmonics, lower torque and hence an efficiency reduction.

Thus, there may be a need for a stator segment for an electrical machine, there may be a need for an electrical machine and there may be a need for a wind turbine, wherein the above sketched disadvantages are reduced or even avoided.

Summary of the Invention

This need may be met by the subject matter according to the independent claims. Advantageous embodiments of the present invention are described by the dependent claims.

According to an embodiment of the present invention it is provided a stator segment for an electrical machine, in particular permanent magnet synchronous electrical generator, comprising: a core ring portion extending in a circumferential direction forming less than a whole circumference; plural first teeth extending radially from the ring portion; two second teeth extending radially from the ring portion and being arranged at two circumferential ends of the ring portion; wherein between each of two adjacent first teeth a first slot is formed, wherein between each of the second teeth and an adjacent first tooth a second slot is formed, the stator segment further comprising: a multiple phase winding set wound according to a concentrated winding topology.

The stator segment may be manufactured from (layers of) ferromagnetic material with high magnetic permeability. The diameter of the assembled stator may be between 5 m and 25 m. The electrical generator may be a wind turbine electrical generator driven by a rotation shaft at which plural rotor blades are mounted.

The core ring portion may be a segment or section of a ring and in particular a section of a circular ring. According to different embodiments, the core ring portion may span different amounts of an angular range being less or equal than 180°. Thus, the entire stator may be assembled from two, three, four, five, six, ... 10 and more stator segments.

Each stator segment may be provided with its own (individual) associated winding set in particular multiple phase winding set. The core ring portion and the first teeth and/or the second teeth may be integrally formed in particular in layers of magnetically permeable material. The first and/or second teeth may extend radially inwards or outwards from the core ring portion.

The two second teeth may limit the stator segment at the two circumferential ends. Thus, the two second teeth may therefore protect any wire portions which may be provided within the second slots. Thereby protection of wire portion from damage may be improved.

Any first slot is formed between two circumferentially immediately adjacent first teeth. Any second slot is formed or limited at one circumferential side by a first tooth and at another circumferential side by a second tooth. The slot width of the first slot may substantially be equal to the slot width of the second slot or may have a different size depending on the application.

The first teeth and the second teeth may be configured in a similar manner but the second tooth may have a smaller circumferential width than the first tooth. In the assembled stator one second tooth of a first stator segment may be close or may even contact a second tooth of a second segment. Between neighbouring stator segments a small gap may be provided to avoid direct or immediate contact of the corresponding second teeth. Two neighbouring stator segments may for example be mounted or coupled to each other by bolts. Other mounting or coupling methods are possible alternatively or additionally.

The second teeth may also be referred to as "end-half-teeth", since they are provided at circumferential ends of the respective stator segments and have typically a circumferential width which is substantially smaller than the circumferential width of the first teeth. The assisting end-half-tooth or in general the second tooth at each segment circumferential end may enclose the end coil in the (second) slot.

In concentrated winding topology all the turns of the wires (wound around one tooth) may have the same magnetic axes. According to the concentrated winding topology, the formed coils are concentric in particular concentric with respect to the first teeth.

The number of phases may for example amount to two, three, four, five, six, seven, or even a higher number of phases. For three phases, for example the winding set may comprise three wires which may be connected according to a star-connection or delta-connection.

The stator segment may be transported and assembled with reduced risk of damaging end coils due to the second teeth which protect end coils from damage.

According to an embodiment of the present invention, the multiple phase winding set comprises for each phase a wire, wherein each wire is wound, in particular in one or more turns, around at least one of the first teeth to form at least one coil such that in each of the first slots two half-coils are present.

Each wire may be wound in several turns around at least one, in particular around several of the first teeth, to form at each first teeth around which the wire is wound, a coil. In each of the first slots thereby a half-coil being wound around a neighbouring first tooth and another half-coil wound another neighbouring first tooth may be present. Thereby, a double-layer configuration may be formed. In each of the second slots only one half-coil may be present such that in each of the second slots there is no double-layer configuration.

According to an embodiment of the present invention, the two half coils in each of the first slots are formed by portions of two wires associated with one phase or by portions of two wires being associated with two different phases.

Thereby, a great flexibility for the winding may be provided.

According to an embodiment of the present invention, in each of the first slots a double-layer design of wire portions is provided, wherein wire portions belonging to different half-coils in any one first slot are arranged circumferentially and/or radially adjacent.

In each of the second slots a double-layer design of wire portion is not present. In each of the second slots only one half-coil of a coil wound around the adjacent first teeth is present.

According to an embodiment of the present invention, the multiple wires are wound around the first teeth but not wound around the second teeth in order to form coils such that in each of the first slots, two half-coils are present.

According to an embodiment of the present invention, none of the wires of the winding set is wound around any of the second teeth. Thus, any of the second teeth is free or void of any coil. Also, no coil is wound around two immediately adjacent second teeth in the assembled state of the entire stator.

According to an embodiment of the present invention, each of the second teeth has a circumferential extent being smaller or larger than or equal to a circumferential extent of any of the first teeth, and/or wherein each of the second teeth has a radial extent being substantially equal to a radial extent of any of the first teeth.

The circumferential extent of the second teeth may for example amount to between 10% and 70% of the circumferential extent of the first tooth. Thereby, weight can be reduced.

According to an embodiment of the present invention, the plural first teeth and second teeth extend radially outwards from the ring portion, and/or wherein the ring portion spans in the circumferential direction 180°, 120°, 90°, 72°, 60°, 45°, 40°, 36°, 30°, 24°, 22.5°, 20°, 18°, 15°, 12°, 10° or between 180° and 5° of a 360°-circumference.

Thereby a great flexibility is provided so enabling to meet requirements of transportation equipment and opportunities.

According to an embodiment of the present invention, it is provided an electrical machine, in particular permanent magnet synchronous generator, comprising: plural stator segments according to one of the preceding embodiments, assembled to form a whole circumference; a rotor rotatably mounted with respect to the stator and having plural permanent magnets mounted at different circumferential positions forming plural magnet poles, the plural stator segments having winding sets with concentrated winding topology, wherein adjacent stator segments have in particular phase shifted winding sets.

The plural stator segments may be mounted to each other such that the assembled and mounted plural stator segments form a ring across a whole circumference. Thereby the respective second teeth of the stator segments may contact each other or may be in close proximity to each other being a small gap in-between.

The rotor may be an inner rotor or an outer rotor. Preferably the first teeth and second teeth extend radially outwards and the rotor is an outer rotor. The winding sets provided at the different stator segments may be physically the equal or identical or not distinguishable, but may electrically provide a different sequence of electrical phases. The respective winding sets of the different stator segments are electrically not connected to each other, but may each be connected separately to an associated converter.

According to an embodiment of the present invention, 2* ΔQs is the total number of second teeth, Nseq is the number of stator segments, wherein ΔQs = Nseq.

When the above relationship is satisfied, it is ensured that each stator segment comprises at each circumferential end one second tooth for protection of coils.

According to an embodiment of the present invention, the number of different winding schemes in the plural stator segments is equal to the number of phases or a multiple thereof, wherein the number of phases is in particular three.

An advantage may be that each phase has the same number of coils which locate in the second slots (i.e. end-coils), obtaining a balanced or symmetric multi-phase system.

According to an embodiment of the present invention, it is provided a wind turbine, comprising: a rotation shaft at which plural rotor blade are mounted; an electrical machine according to any of preceding embodiments, the rotor of the electrical machine being mechanically coupled to the rotation shaft.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates an electrical machine according to an embodiment of the present invention, comprising several stator segments according to an embodiment of the present invention;

Fig. 2 schematically illustrates a stator segment according to another embodiment of the present invention;

Fig. 3 schematically illustrates plural assembled stator segments according to an embodiment of the present invention; and

Fig. 4 schematically illustrates a wind turbine according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

According to embodiments of the present invention, the circumferential end coil-sides of a stator segment are enclosed by merging two teeth/pole combinations (adding extra slots/pole into original slot/pole combination). Thereby, the assisting end segment-half-teeth can be added with minor influences on the performance, i.e. torque and with the advantage of lower cogging torque and torque ripple. The dimension can be designed to eliminate the influence of segment-to-segment gap.

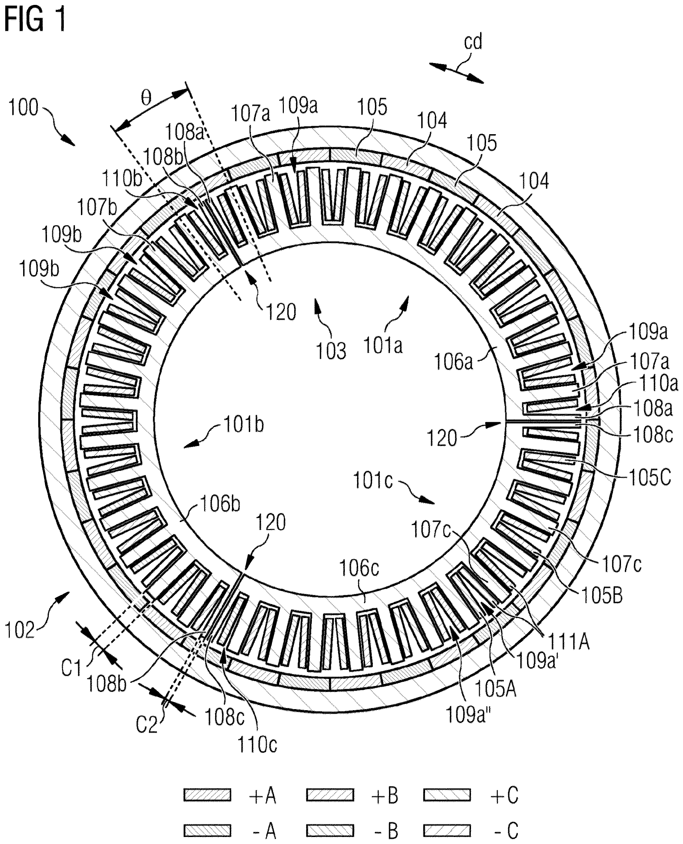

The electrical machine 100 schematically illustrated in Fig. 1 comprises plural stator segments 101a, 101b, 101c which are assembled to form a whole circumference (in the circumferential direction cd) and form a stator 103. The electrical machine 100 further comprises a rotor 102 which is rotatably mounted with respect to the stator 103 (formed by the assembled stator segments 101a, 101b, 101c). The rotor 102 has plural magnets 104, 105 mounted thereon, wherein each pair 104, 105 forms a pole pair having alternating pole or magnetic pole configurations, such that the magnet 104 for example provides a north pole at a radially inner end and the magnet 105 provides a south pole at a radially inner end.

In the electrical machine 100, each of the plural stator segments 101a, 101b, 101c has winding sets 105A, 105B, 105C, for three different electrical phases A, B, C. In Fig. 1, the winding topology of the three phase wires are indicated including the indication of the winding sense, meaning running inwards or outwards.

The electrical machine 100 comprises in the illustrated embodiment three stator segments 101a, 101b, 101c having segment-to-segment gap 120 between neighbouring segments. In other embodiments more or less segments may be provided to form a whole circumference of a stator.

Each stator segment 101a, 101b, 101c comprises a core ring portion 106a, 106b, 106c which extends in the circumferential direction cd forming less than a whole circumference. In the illustrated embodiment, the stator segments form each a 120° segment of a 360° circumference. Each stator segment comprises plural first teeth 107a, 107b, 107c which extend radially (outwards) from the respective ring portion 106a, 106b, 106c. Each of the stator segments 101a, 101b, 101c further comprises two second teeth 108a, 108b, 108c, respectively, which also extend radially (outwards) from the ring portion 106a, 106b, 106c and being arranged at two circumferential ends of the respective ring portion or the stator segment 101a, 101b, 101c.

Thereby, between each of two adjacent first teeth (for example teeth 107a) a first slot 109a is formed. Similarly between any two first teeth 107b of the second stator segment 101b, the first slot 109b is formed. The same holds for the third segment 101c. Further, between each of the second teeth 108a and an adjacent first tooth 107a, a second slot 110a is formed.

The multiple phase winding set 105A, 105B, 105C is wound across the assembled stator according to a concentrated winding topology. The multiple phase winding set comprises for each phase, for example A, B, C, a wire (electrical conductor) would around several teeth. For example for phase A, the wire 105A is provided. This wire 105A is wound around at least one of the first teeth 107a to form at least one coil, for example the coil 111A as illustrated in Fig. 1 formed by winding the wire 105A. Thereby, in each of the first slots 109a two half-coils (belonging to same or different phases) are present.

The two half-coils in each of the first slots 109a are formed by portions of two wires associated with one phase or by portions of two wires being associated with two different phases, or by portions of two wires associated with one system or by portions of two wires being associated with two different systems. For example in the first slot labelled 109a' wire portions both belonging to the phase A are provided. In contrast at the first slot 109a" one half-coil belongs to the phase A and the other half-coil belongs to the phase C.

In each of the first slots 109a, b, c, a double-layer design of wire portion is provided, wherein wire portions belonging to different half-coils are arranged circumferentially and/or radially adjacent. In the illustrated embodiment, the wire portions in one of the first slots 109a, b, c are arranged circumferentially adjacent (side-by-side). In other embodiments the different half-coils may be arranged radially adjacent to each other (also referred to as arrangement on top of each other).

As can be appreciated from Fig. 1, none of the wires 105A, 105B, 105C is wound around any of the second teeth 108a, b, c.

As can also be appreciated from Fig. 1, each of the second teeth 108a, b, c has a circumferential extent c2 which is smaller than a circumferential extent c1 of the first teeth 107a, b, c. The radial extent of the second and first teeth may be substantially similar or the same. In other embodiments, the respective stator segments may span a different angle range than the angle range as illustrated.

The total number of second teeth 108a, b, c is in the illustrated embodiment 6 and the number of segments is 3. Thus, the equation $\Delta Qs = Nseq$ holds, wherein $2 \times \Delta Qs$ is the total number of second teeth 108a, b, c and Nseq is the number of stator segments.

As can be taken from the different shadings used for the different phases in different running direction, the windings in the different segments are not according to a same topology but are phase-shifted relative to each other. It should be appreciated that each of the stator segments 101a, b, c comprises its own multiple phase winding set. Only one winding set, namely the winding set 105A, B, C is labelled in Fig. 1.

A concentrated winding generator according to an embodiment of the present invention may be characterized by a tooth/pole (or slot/pole) combination, namely the ratio of Qs/2p (Qs is the number of teeth or slots, 2p is the number of poles, p is the number of pole pairs), which is usually described by the minimum tooth/pole (or slot/pole) number of a module machine if Qs/2p have a common divider. For example, for Qs=144, 2p=120, the tooth/pole (or slot/pole) combination is 12/10. For concentrated winding generators, this combination is typically close to 1. The following combinations Qs/2p are possible according to embodiments of the present invention or which may serve as starting points for embodiments of the present invention: 12/10, 12/14, 24/22, 18/14, 18/16, 18/20, 18/22, 24/20, 24/26, 27/22, 27/24, 27/26, 30/26 etc.

For large generators despite high numbers of slots and poles, the combination may remain the same as small generators.

One example of a slot/pole number, to which the invention is not limited to, would be 12 multiplied by a 18/20 slot/pole combination would give 216 slots and 240 poles as a baseline machine. This could be split into 12 segments. According to an embodiment of the present invention, to each segment an additional half tooth to both circumferential ends is added. Additionally, 8 poles could be added to the rotor. So, this would give a total slot/pole number of 228/248.

For large generators with conventional double-layer concentrated winding design, the circumferential end coil-sides of each stator segment are exposed to air. According to embodiments of the present invention it is proposed to enclose the circumferential end coil-sides in slots by adding extra "end-half-tooth" (also referred to as "second tooth") at each circumferential end of the segments and meanwhile having extra pole(s) (optionally). The number of added "half-teeth" may be defined to be $2\times\Delta Qs$. The number of added poles is defined to be $2\times\Delta p$. They are determined based on the original combination of Qs/2p. The width of added end-half tooth and the winding scheme should also be adapted to have good performances.

1) Number of added full teeth

The number of added half-teeth is defined to be $2\times\Delta Qs$. Two facing end-half-teeth of two neighbouring segments are regarded as one "full" tooth here. Therefore, $\Delta Qs$ is the number of added "full" teeth which should be identical to the number of segments Nseg, meaning $\Delta Qs$=Nseg.

2) Number of added poles

The number of added poles is defined to be $2\times\Delta p$, where $\Delta p$ is the number of added pole pairs. Theoretically, $\Delta p$ is an independent variable which may take any integer number. However, it influences the determination of the end-half-tooth width, therefore the constraints as given below may apply.

3) Width of the added end-half-tooth

In order to have enough space for the added end-half-teeth, the other "normal" slots (i.e. the first slots), and/or teeth (i.e. first teeth) have to be reduced in width, which means the slot pitch $\tau s$ is reduced. The new $\tau s$ depends on the number of added teeth $\Delta Qs$ as well as the width of added end-half-tooth w_EHT. Simultaneously the pole pitch $\tau p$ is also reduced due to the added poles. Therefore

$$\tau s = \tau s(Qs,\ \Delta Qs,\ w\_EHT)$$

$$\tau p = \tau p(p,\ \Delta p).$$

The following equation(s) may hold:

$$\tau p/\tau s = Qs/2p$$

or
$\tau p/\tau s$ approximately equals to Qs/2p

4) Winding scheme

Winding scheme has to be adapted after adding new slot/pole combination, i.e. extra teeth and poles. The new winding scheme depends on the phase shift $\Theta$ (i.e. angle in electrical degree) in no-load condition between the two neighbouring end coils of two neighbouring segments which should fulfill

$$\Theta = 180° \ * \ (2p/Qs + 2\Delta p/\Delta Qs)$$

or
$\Theta$ is approximately equal to: $180° * (2p/Qs + 2\Delta p/\Delta Qs)$

Various $\Delta p/\Delta Qs$ may lead to different winding schemes in each segment, thus different segment types. For the aim of a balanced m-phase system, the number of different segment types (or winding schemes) are recommended to be m or multiple times of m, wherein the numbers of end-coils of each phase are identical. The final determination of the end-half-tooth width and number of added poles depends on the performance requirements (for example output power, torque ripple, losses, etc.) and manufacturing complexity.

The proposed design method, based on correct selections of $\Delta p$, $\Delta Qs$ and wEHT will have minor influences on the performances, i.e. torque, compared to the original design.

The original design may refer to any generator design, which has a total slot (or tooth) number identical to the total number of the first teeth of all segments, and a tooth/pole (or slot/pole) combination Qs/2p identical or approximately identical to $\tau p/\tau s$, for example but not limited to 12/10, 12/14, 24/22, 18/14, 18/16, 18/20, 18/22, 24/20, 24/26, 27/22, 27/24, 27/26, 30/26 etc. ($\tau p$ and $\tau s$ are the pole pitch and slot pitch of first slot of a generator with end-tooth design.)

In this manner the skilled person can find the original design (Qs and 2p) by measuring the $\tau p$ and $\tau s$ of the existing design with end-half-teeth.

It also has the advantage of lower cogging torque and torque ripple, meanwhile, eliminating the influence of segment-to-segment gap.

A conventional generator design with 36 slots/30 poles, 3 segments may be considered. Starting from this conventional generator according to an embodiment of the present invention three teeth ($2\times\Delta Qs=6$) and two extra poles ($2\times\Delta p=2$) are added. The winding scheme of the stator has to be also modified to ensure the maximum output power.

Segments will have different winding schemes. In the following Table 1 the winding scheme of the electrical machine illustrated in Fig. 1 is given according to an exemplary proposed design (with end-half-teeth, 30 poles + 2 extra poles, based on 36 slots/30 poles design).

Table 1:

| Segment 1 | -B, +B, +B, -B, +C, -C, -C, +C, -A, +A, +A, -A, +B, -B, -B, +B, -C, +C, +C, -C, +A, -A, -A, +A |
|---|---|
| Segment 2 | -C, +C, +C, -C, +A, -A, -A, +A, -B, +B, +B, -B, +C, -C, -C, +C, -A, +A, +A, -A, +B, -B, -B, +B |
| Segment 3 | -A, +A, +A, -A, +B, -B, -B, +B, -C, +C, +C, -C, +A, -A, -A, +A, -B, +B, +B, -B, +C, -C, -C, +C |

The new winding scheme is determined by the phase-shift angle $\Theta$, which is 270° (electrical degrees for the illustrated embodiment). As can be appreciated from Table 1, the winding scheme in segment 1, segment 2, segment 3 corresponding to segments 101a, 101b, 101c illustrated in Fig. 1, is mutually phase-shifted (and inverted), but is not equal.

For any given number of phases and given slot/pole combination, following equation regarding winding scheme, the skilled person will generate a corresponding winding scheme with phase-shift.

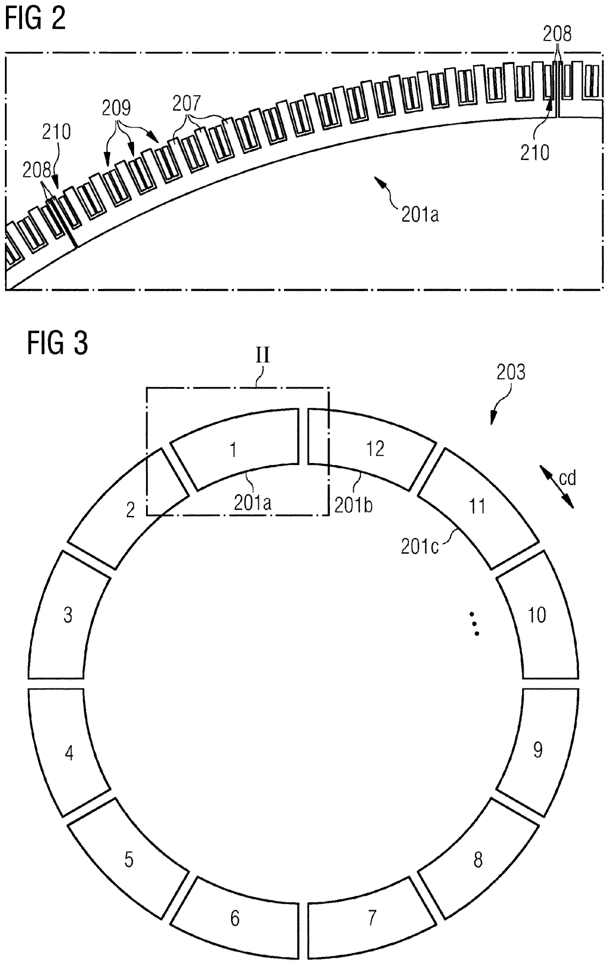

**Fig. 2** schematically illustrates a stator segment 201a according to another embodiment of the present invention. 12 segments with the same geometries with stator segments 201a are required in order to form a whole circumference of a stator. Also the stator segment 201a has second teeth 208 at circumferential ends and first teeth 207 in-between. In each of first slots 209, a double-layer design is present while in the second slots 210 only a single-layer design is present, meaning only one half-coil is present.

The following Table 2 illustrates the winding scheme for the different segments 1 to 12 (201a, b, c, ...), one of which is illustrated in Fig. 2, in order to assemble an entire stator 203, as is schematically illustrated in Fig. 3.

The Proposed design has end-half-teeth, 180 poles + 4 extra poles, based on 216 slots/180 poles design.

Table 2:

| Segment 1, 4, 7, 10 | -B, +B, +B, -B, +C, -C, -C, +C, -A, +A, +A, -A, +B, -B, -B, +B, -C, +C, +C, -C, +A, -A, -A, +A, -B, +B, +B, -B, +C, -C, - C, +C, -A, +A, +A, -A |
|---|---|
| Segment 2, 5, 8, 11 | -A, +A, +A, -A, +B, -B, -B, +B, -C, +C, +C, -C, +A, -A, -A, +A, -B, +B, +B, -B, +C, -C, -C, +C, -A, +A, +A, -A, +B, -B, - B, +B, -C, +C, +C, -C |
| Segment 3, 6, 9, 12 | -C, +C, +C, -C, +A, -A, -A, +A, -B, +B, +B, -B, +C, -C, -C, +C, -A, +A, +A, -A, +B, -B, -B, +B, -C, +C, +C, -C, +A, -A, - A, +A, -B, +B, +B, -B |

In the electrical machine illustrated in Fig. 3, in total 184 poles are present and 228 slots are present.

Advantages of embodiments of the present invention may include to enable a lifetime reliable solution for implementing concentrated winding topology with modularized stator and the direct-drive wind turbines. In addition, the 2f oscillation due to segment-to-segment tolerance gap can be reduced as part of the design.

Compared to the exposed end coils with mechanical fixation solutions (using straps, clamps, bolds, etc.) enclosing the end coils and slots by using end-half-tooth is advantageous in terms of manufacturing difficulty, reliability and lifetime. The potential installation damage of end coils due to mechanical contact is avoided. Compared to the other solutions, the proposed design has lower harmonics and lower influences on the performances.

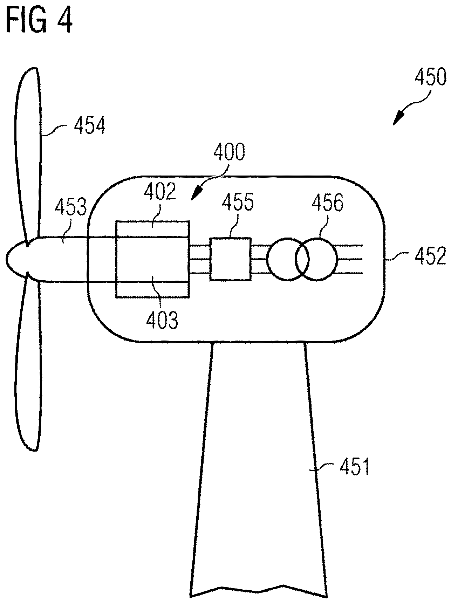

**Fig. 4** schematically illustrates a wind turbine 450 according to an embodiment of the present invention. The wind turbine 450 includes a wind turbine tower 451 on top of which a nacelle 452 is rotatably mounted. The nacelle 452 harbours an electrical machine 400 according to an embodiment of the present invention. A rotation shaft 453 to which plural rotor blades 454 are mounted, is coupled to the electrical machine 400. The electrical machine outputs a three-phase output power which is provided to a (optional) converter 455. The converter converts the AC power stream to a fixed frequency AC power stream and supplies the fixed frequency power stream to a wind turbine transformer 456. The electrical machine 400 comprises the outer rotor 402 rotating relative to the stator 403 which may be configured similar to the stator 103 illustrated in Fig. 1.

A single- or multi-stage gearbox could also be present in the wind turbine drivetrain.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Stator segment (101a,b,c) for an electrical machine (100), in particular permanent magnet synchronous electrical generator, comprising:

   a core ring portion (106a,b,c) extending in a circumferential direction (cd) forming less than a whole circumference;
   plural first teeth (107a,b,c) extending radially from the ring portion (106a,b,c);
   two second teeth (108a,b,c) extending radially from the ring portion (106a,b,c) and being arranged at two circumferential ends of the ring portion;
   wherein between each of two adjacent first teeth (107a,b,c) a first slot (109a,b,c) is formed,
   wherein between each of the second teeth (108a,b,c) and an adjacent first tooth (107a,b,c) a second slot (110a, b,c) is formed,

   the stator segment further comprising:
   a multiple phase winding set (105A,B,C) wound according to a concentrated winding topology.

2. Stator segment according to the preceding claim,

   wherein the multiple phase winding set (105A,B,C) comprises for each phase a wire (105A),
   wherein each wire is wound, in particular in one or more turns, around at least one of the first teeth (107a) to form at least one coil (111A) such that in each of the first slots (109a', 109a'') two half-coils are present.

3. Stator segment according to the preceding claim, wherein the two half coils in each of the first slots (109a', 109a'') are formed by portions of two wires associated with one phase (A, B, C) or by portions of two wires being associated with two different phases (A, B, C).

4. Stator segment according to one of the preceding claims, wherein in each of the first slots (109a,b,c) a double-layer design of wire portions is provided, wherein wire portions belonging to different half-coils in any one first slot are arranged circumferentially and/or radially adjacent.

5. Stator segment according to one of the preceding claims, wherein none of the wires (105A,B,C) of the winding set is wound around any of the second teeth (108a,b,c).

6. Stator segment according to one of the preceding claims,

   wherein each of the second teeth (108a,b,c) has a circumferential extent being smaller or larger than or equal to a circumferential extent of any of the first teeth (107a,b,c), and/or
   wherein each of the second teeth (108a,b,c) has a radial extent being substantially equal to a radial extent of any of the first teeth (107a,b,c).

7. Stator segment according to one of the preceding claims, wherein the plural first teeth (107a,b,c) and second teeth (108a,b,c) extend radially outwards from the ring portion, and/or
   wherein the ring portion spans in the circumferential direction 180°, 120°, 90°, 72°, 60°, 45°, 40°, 36°, 30°, 24°, 22.5°, 20°, 18°, 15°, 12°, 10° or between 180° and 5° of a 360°-circumference.

8. Electrical machine (100), in particular permanent magnet synchronous generator, comprising:

plural stator segments (101a,b,c) according to one of the preceding claims, assembled to form a whole circumference,

a rotor (102) rotatably mounted with respect to the stator (103) and having plural permanent magnets (104, 105) mounted at different circumferential positions forming plural magnet poles,

the plural stator segments (101a,b,c) having winding sets with concentrated winding topology, wherein adjacent stator segments have in particular phase shifted winding sets.

9. Electrical machine according to the preceding claim, wherein 2* $\Delta$Qs is the total number second teeth, Nseq is the number of stator segments, wherein $\Delta$Qs = Nseq.

10. Electrical machine according to any of claims 8 or 9, wherein the number of different winding schemes in the plural stator segments (101a,b,c) is equal to the number of phases or a multiple thereof, wherein the number of phases is in particular three.

11. Electrical machine according to any of claims 8 to 10, wherein

Qs + $\Delta$Qs is the total number of teeth, i.e. Nseg * (number of first teeth + number of second teeth)
2 * p + 2 * $\Delta$p is the total number of poles,
wherein Qs, 2p have a common divider,
wherein Qs/(2p) is between 0.7 and 1.5,
p is an integer number,
$\Delta$p is an integer number.

12. Electrical machine according to any of claims 8 to 11, wherein

$\tau$p is the circumferential width or pole pitch of each of the poles,
$\tau$s is the circumferential width or slot pitch of each of the first slots,
w_EHT is the width of the second teeth,
wherein $\tau$s depends on $\Delta$Qs, on w_EHT and on Qs,
wherein $\tau$p depends on p and $\Delta$p,

13. Electrical machine according to any of claims 8 to 12,

wherein $\tau$p/$\tau$s = Qs/(2p),
wherein
Qs is any of: 360, 384, 408, 432,
2p is any of: 300, 320, 340, 360.

14. Electrical machine according to any of claims 8 to 13, wherein a number of the plural stator segments is 2 or 3 or 4 or 5 or 6 or 7 or 8 or 9 or 10 or 11 or 12 or between 13 and 50.

15. Electrical machine according to any of claims 8 to 14, wherein the segments are connected to 2 or 3 or 4 or 5 or 6 or between 6-12 electrically separate converter channels.

16. Wind turbine (450), comprising:

a rotation shaft (453) at which plural rotor blade (454) are mounted;
an electrical machine (400) according to any of claims 8 to 14,

the rotor (402) of the electrical machine being mechanically coupled to the rotation shaft (453).

# FIG 1

FIG 2

FIG 3

FIG 4

Europäisches Patentamt

European Patent Office

Office européen des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/166265 A1 (TAKAGI SHIGEKAZU [JP] ET AL) 26 May 2022 (2022-05-26) | 1-4, 6-10,14 | INV. H02K1/14 |
| Y | * paragraph [0025] – paragraph [0143]; figures 1-12 * | 4 | H02K3/28 H02K7/18 |
| Y | EP 3 557 733 A1 (SIEMENS GAMESA RENEWABLE ENERGY AS [DK]) 23 October 2019 (2019-10-23) * the whole document * | 4 | ADD. H02K21/16 H02K29/03 |
| X | US 2020/235624 A1 (THOMAS ARWYN [GB] ET AL) 23 July 2020 (2020-07-23) * the whole document * | 1-14,16 | |
| X | GB 2 588 789 A (SAFRAN ELECTRICAL & POWER [GB]) 12 May 2021 (2021-05-12) | 1-8,10, 14 | |
| A | * the whole document * | 11-13,15 | |
| X | EP 3 252 927 A1 (SIEMENS AG [DE]) 6 December 2017 (2017-12-06) * the whole document * | 1,8,12, 13,15 | |

TECHNICAL FIELDS SEARCHED (IPC)

H02K

The present search report has been drawn up for all claims

| Place of search | Date of completion of the search | Examiner |
|---|---|---|
| Munich | 25 September 2023 | von Rauch, Marianne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6903

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2023

| Patent document cited in search report | | Publication date | Patent family member(s) | | | Publication date |
|---|---|---|---|---|---|---|
| US 2022166265 | A1 | 26-05-2022 | JP | 2022084158 | A | 07-06-2022 |
| | | | US | 2022166265 | A1 | 26-05-2022 |
| EP 3557733 | A1 | 23-10-2019 | CN | 111937276 | A | 13-11-2020 |
| | | | DK | 3557733 | T3 | 31-05-2021 |
| | | | EP | 3557733 | A1 | 23-10-2019 |
| | | | US | 2021083533 | A1 | 18-03-2021 |
| | | | WO | 2019201595 | A1 | 24-10-2019 |
| US 2020235624 | A1 | 23-07-2020 | CN | 110337772 | A | 15-10-2019 |
| | | | EP | 3560075 | A1 | 30-10-2019 |
| | | | US | 2020235624 | A1 | 23-07-2020 |
| | | | WO | 2018141579 | A1 | 09-08-2018 |
| GB 2588789 | A | 12-05-2021 | NONE | | | |
| EP 3252927 | A1 | 06-12-2017 | DK | 3252927 | T3 | 22-06-2020 |
| | | | EP | 3252927 | A1 | 06-12-2017 |

EPO FORM P0459

For more details about this annex : see Official Journal of the European Patent Office, No. 12/82